# EUROPÄISCHE PATENTSCHRIFT

(11) **EP 1 456 548 B1**
(45) Veröffentlichungstag und Bekanntmachung des Hinweises auf die Patenterteilung: **11.01.2006**
(21) Anmeldenummer: 02792788.8
(22) Anmeldetag: 22.11.2002
(51) Int. Cl.: F16D 23/02, F16D 23/06

(54) **KUPPLUNGSKÖRPER FÜR EINE SCHALT- UND SYNCHRONISIEREINRICHTUNG**
CLUTCH BODY FOR A GEAR-SHIFTING AND SYNCHRONIZING DEVICE
CORPS D'EMBRAYAGE POUR SYSTEME DE PASSAGE DE VITESSE ET DE SYNCHRONISATION

(30) Priorität: 21.12.2001 DE 10163413
(43) Veröffentlichungstag der Anmeldung: 15.09.2004
(73) Patentinhaber: INA-Schaeffler KG, 91074 Herzogenaurach (DE)
(72) Erfinder: SCHWUGER, Josef, 91315 Höchstadt (DE)
(86) Internationale Anmeldenummer: PCT/EP2002/013114
(87) Internationale Veröffentlichungsnummer: WO 2003/054405

(56) Entgegenhaltungen:
- WO-A-02/08626
- US-A- 6 016 895

## Beschreibung

### Gebiet der Erfindung

Kupplungskörper für eine Schalt- und Synchronisiereinrichtung, insbesondere für Kraftfahrzeuggetriebe, der eine Kupplungsscheibe und einen Konusring aufweist, wobei die Kupplungsscheibe mit einem Gangrand zumindest drehfest verbunden ist und an ihrem äußeren Umfang ein Zahnprofil aufweist, das mit einem Gegenprofil einer mit einer Getriebewelle drehfest verbundenen Schiebemuffe kuppelbar ist.

### Hintergrund der Erfindung

Es ist bekannt, EP 0 508 976 A1, bei einer Schalt- und Synchronisiereinrichtung eine Kupplungsscheibe vorzusehen, die einerseits drehfest mit dem Gangrad und andererseits drehfest mit einem Konusring in Wirkverbindung steht. Nähere Angaben zu der Kupplungsscheibe finden sich in dieser europäischen Patentanmeldung nicht, da die Anmeldung sich auf den Konusring und dessen Reibfläche konzentriert. Es kann aber davon ausgegangen werden, dass es sich bei der Kupplungsscheibe um ein massives, einstückiges Bauteil handelt und dass sie aus Vollmaterial hergestellt ist. Die Kupplungsscheibe ist daher teuer in der Herstellung und weist ein hohes Gewicht auf.

### Aufgabe der Erfindung

Aufgabe der Erfindung ist es daher, eine Kupplungsscheibe zur Verfügung zu stellen, die optimal gestaltet ist, mittels einer kostengünstigen Fertigungstechnologie hergestellt werden kann und alle erforderlichen Funktionen erfüllt.

### Zusammenfassung der Erfindung

Die Aufgabe der Erfindung wird dadurch gelöst, dass die Kupplungsscheibe mehrteilig hergestellt ist und die Teile mit einander verbunden sind. Durch diese Ausgestaltung der Erfindung ist es möglich, den Kräfte- und Materialverbrauch bei der Hehrstellung auf ein Minimum zu reduzieren und auch die Ausprägung der Flächen und Radien zu verbessern. Es ist zwar auch denkbar, die Kupplungsscheibe als Einzelteil mittels der Umformtechnik herzustellen. Dabei könnten aber je nach Werkstoff und Größe der Kupplungsscheibe sehr hohe Umformkräfte erforderlich werden und die Radien nicht klein genug hergestellt werden.

Auch diese denkbaren Nachteile werden durch die mehrteilig hergestellte Kupplungsscheibe, die in vorteilhafter Weise auch spanlos mittels Umform- oder Presstechnologie hergestellt werden kann, behoben.

Nach der Erfindung werden die Teile mittels Clinchverbindungen miteinander verbunden. Die Teile weisen dabei zueinander passende Vorsprünge und Ausnehmungen auf, die Hinterschneidungen haben, so dass nach Verhaken der Teile aneinander eine vollständige Festlegung in der Ebene der Kupplungsscheibe gegeben ist.

Die Teile können aber auch nach ihrer Herstellung passende Stirnflächen, vorzugsweise ebene Stimflächen aufweisen, an denen die Teile nach gegenseitiger Fixierung miteinander verschweißt werden.

Gemäß der Erfindung wird vorgeschlagen, dass die Kupplungsscheibe beziehungsweise die Teile Öffnungen aufweisen, in die Vorsprünge des Konusringes eingreifen können. Dadurch kann eine Festlegung des Konusringes an der Kupplungsscheibe erfolgen, so dass diese drehfest und zentriert von der Kupplungsscheibe gehalten wird.

Weiterhin wird vorgeschlagen, dass der Konusring und die Kupplungsscheibe unlösbar miteinander verbunden, vorzugsweise miteinander verschweißt sind. Dies ist einmal dadurch möglich, dass die Teile zu einer Kupplungsscheibe zusammengeschweißt und dann im Bereich der Öffnungen und der Vorsprünge miteinander verschweißt werden. Es ist aber auch möglich, dass der Konusring und die Kupplungsscheibe nach Befestigung der Teile aneinander umlaufend miteinander verschweißt werden. Wird die umlaufende Schweißung gewählt, dann ist es nicht erforderlich, dass die Teile der Kupplungsscheibe starr miteinander verbunden sind, beispielsweise durch eine Schweißung. Dann reicht es nämlich auch aus, dass die Teile zunächst, über die Clinchverbindungen, gegeneinander und zum Konusring fixiert sind, da durch die umlaufende Schweißung die Teile und der Konusring danach endgültig starr miteinander verbunden sind.

### Kurze Beschreibung der Zeichnungen

Zur weiteren Erläuterung der Erfindung wird auf die Zeichnungen verwiesen, in denen Ausführungsbeispiele vereinfacht dargestellt sind. Es zeigen:
- Figur 1: eine Seitenansicht einer Kupplungsscheibe, die aus drei Teilen zusammengesetzt ist,
- Figur 2: eine Seitenansicht von Teilen, die zusammengefügt eine Kupplungsscheibe nach Figur 1 bilden,
- Figur 3: eine Seitenansicht einer erfindungsgemäßen Kupplungsscheibe,

- Figur 4: einen Kupplungskörper im Querschnitt, der eine Kupplungsscheibe und einen Konusring aufweist und
- Figur 5: einen Kupplungskörper gemäß Figur 4 in perspektivischer Darstellung.

### Detaillierte Beschreibung der Zeichnungen

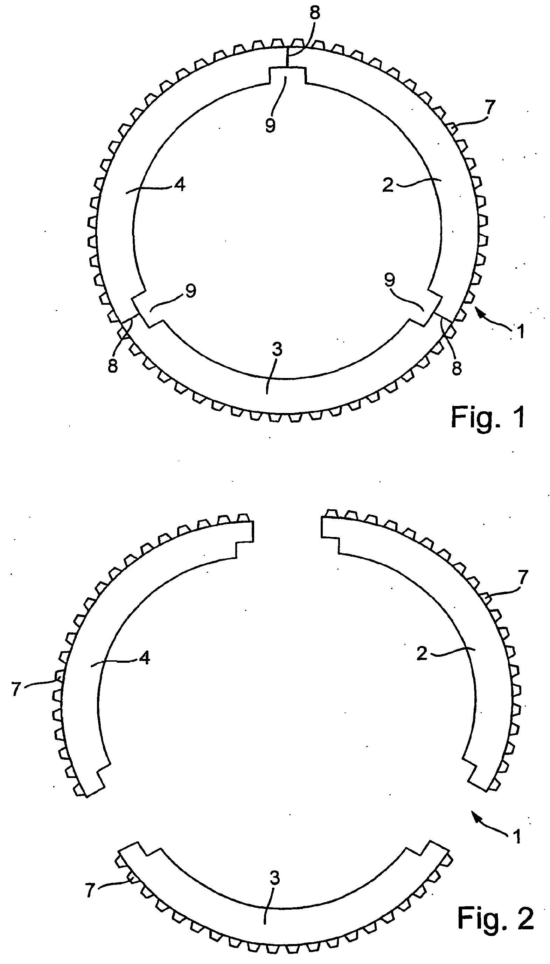

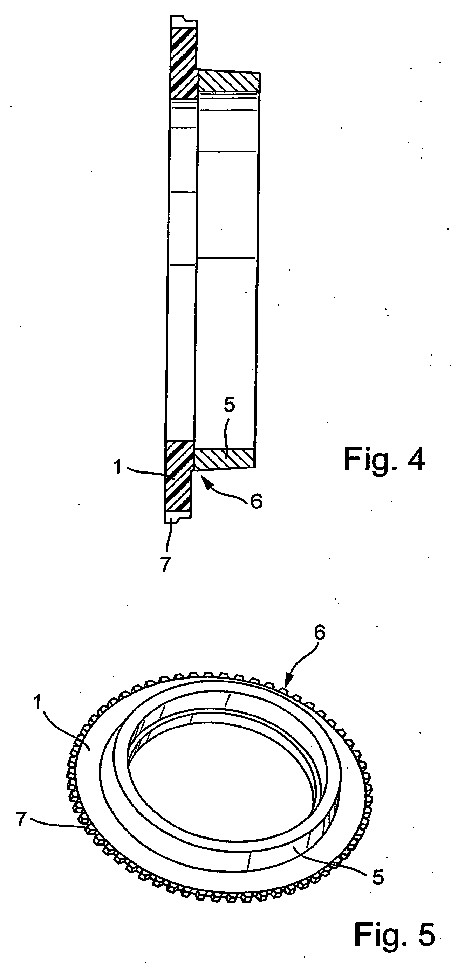

In den Figuren 1 bis 5 ist, soweit im einzelnen dargestellt, mit 1 eine Kupplungsscheibe bezeichnet, die je nach Ausgestaltung aus zwei 2a und 3a oder drei Teilen 2, 3 und 4 aufgebaut ist. Die Kupplungsscheibe 1 ist, wie in den Figuren 4 und 5 dargestellt, mit einem Konusring 5 verbunden, insbesondere verschweißt, so dass die Kupplungsscheibe 1 und der Konusring 5 zusammen den Kupplungskörper 6 bilden. Der Konusring 5 ist an seinem Außenumfang konisch ausgebildet und zwar von der Kupplungsscheibe ausgehend nach außen sich verjüngend, so dass er mit einem nicht dargestellten Innenkonus eines Synchronringes, der zu dem Konus des Konusringes 5 passt, in Wirkverbindung treten kann.

Die Kupplungsscheibe 1 weist an ihrem Außenumfang ein Zahnprofil 7 auf, das zu einem nicht dargestellten Gegenprofil einer Schiebemuffe passt, so dass nach Synchronisation über die Konusse des Synchronringes und des Konusringes 5 eine starre Drehverbindung zwischen der Kupplungsscheibe und der Schiebemuffe hergestellt werden kann.

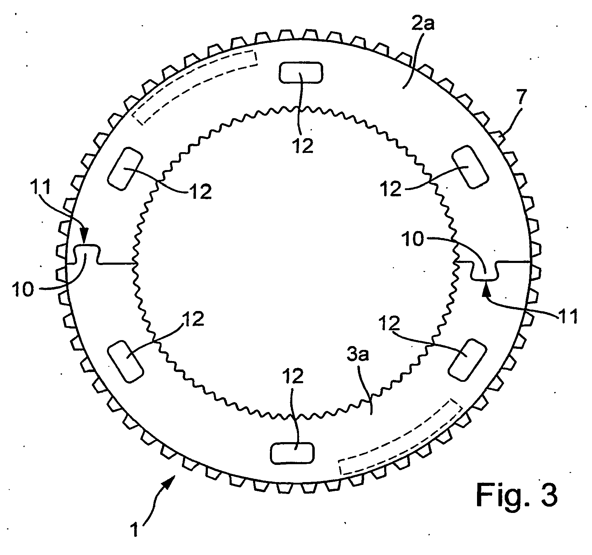

Wie in den Figuren 1 und 2 dargestellt, weisen die Teile 2, 3 und 4 stimseitige Flächen auf, mit denen die Teile passend zusammengeschweißt sind (Fig. 1) oder verschweißt werden können, da dies in Fig. 2 noch nicht erfolgt ist. Die Schweißnähte sind in Figur 1 mit 8 bezeichnet. Die Kupplungsscheibe nach Figur 1 ist, nicht dargestellt, mit einem ebenfalls nicht dargestellten Gangrad verbunden. Mit 9 sind Ausnehmungen bezeichnet, in die Vorsprünge am Konusring eingreifen können. Die Kupplungsscheibe nach Figur 3 besteht aus zwei Teilen 2a und 3a, die mittels Clinchverbindungen gegeneinander arretiert werden können. Zum Arretieren der Teile mittels der Clinchverbindungen weist jedes Teil einen mit 10 bezeichneten Vorsprung auf, der einen vergrößerten Kopf hat. Auf der Gegenseite ist eine entsprechende Ausnehmung 11 an jedem der Teile vorgesehen, die eine Erweiterung aufweist, in die der Kopf des Gegenteils hineinragt. Mit 12 sind weiterhin Öffnungen bezeichnet, in die nicht dargestellte Nasen am Konusring eingreifen können.

Wie in Figur 4 dargestellt, besteht der mit 6 bezeichnete Kupplungskörper aus zwei getrennten Teilen, nämlich der Kupplungsscheibe 1 und dem Konusring 5, die auch an ihrer Berührungsfläche miteinander verschweißt sein können.

### Bezugszeichenliste

- 1: Kupplungsscheibe
- 2: Teil
- 2a: Teil
- 3: Teil
- 3a: Teil
- 4: Teil
- 5: Konusring
- 6: Kupplungskörper
- 7: Zahnprofil
- 8: Schweißnaht
- 9: Ausnehmung
- 10: Vorsprung
- 11: Aussparung
- 12: Öffnung

## Patentansprüche

1. Kupplungskörper (6) für eine Schalt- und Synchronisiereinrichtung, insbesondere für Kraftfahrzeuggetriebe, der eine Kupplungsscheibe (1) und einen Konusring (5) aufweist, wobei die Kupplungsscheibe (1) mit einem Gangrad zumindest drehfest verbindbar ist und an ihrem Außenumfang ein Zahnprofil (7) aufweist, das mit einem Gegenprofil einer mit einer Getriebewelle drehfest verbundenen Schiebemuffe kuppelbar ist, **dadurch gekennzeichnet, dass** die Kupplungsscheibe (1) aus mehreren Teilen (2, 2a, 3, 3a oder 4) hergestellt und die Teile (2, 2a, 3, 3a oder 4) miteinander mittels Clinchverbindungen (10 und 11) verbunden sind, so dass nach Verhaken der Teile aneinander eine vollständige Festlegung in der Ebene der Kupplungsscheibe (1) gegeben ist.

2. Kupplungskörper für eine Schalt- und Synchronisiereinrichtung nach Anspruch 1, **dadurch gekennzeichnet, dass** die Teile (2, 2a, 3, 3a oder 4) spanlos mittels eines Umform- oder Pressverfahrens hergestellt sind.

3. Kupplungskörper für eine Schalt- und Synchronisiereinrichtung nach einem der Ansprüche 1 oder 2, **dadurch gekennzeichnet, dass** die Teile (2, 2a, 3, 3a und 4) miteinander verschweißt (Schweißnähte 8) sind.

4. Kupplungskörper für eine Schalt- und Synchronisiereinrichtung nach einem der Ansprüche 1 bis 3, **dadurch gekennzeichnet, dass** die Kupplungsscheibe (1) Öffnungen (12) aufweist, in die Vorsprünge des Konusringes (5) eingreifen.

5. Kupplungskörper für eine Schalt- und Synchronisiereinrichtung nach einem der Ansprüche, 1 bis 4, **dadurch gekennzeichnet, dass** der Konusring (5) und die Kupplungsscheibe (1) unlösbar miteinander verbunden, vorzugsweise miteinander verschweißt sind und den Kupplungskörper (6) bilden.

## Claims

1. Clutch body (6) for a gearshift and synchronising device, in particular for motor-vehicle gearboxes, said clutch body (6) comprising a clutch plate (1) and a conical ring (5), said clutch plate (1) being adapted to be at least fixed in rotation to a gearwheel and comprising on its outer periphery, a tooth profile (7) that can be coupled to a counter profile of a sliding sleeve that is fixed in rotation to a gearbox shaft, **characterised in that** the clutch plate (1) is made out of several parts (2, 2a, 3, 3a or 4), and the parts (2, 2a, 3, 3a or 4) are connected to one another by clinch connections (10 and 11), so that, when the parts have hooked onto one another, they are located entirely in the plane of the clutch plate (1).

2. Clutch body for a gearshift and synchronising device according to claim 1, **characterised in that** the parts (2, 2a, 3, 3a or 4) are made without chip removal by a shaping or pressing method.

3. Clutch body for a gearshift and synchronising device according to claim 1 or 2, **characterised in that** the parts (2, 2a, 3, 3a and 4) are welded (weld seams 8) to one another.

4. Clutch body for a gearshift and synchronising device according to one of claims 1 to 3, **characterised in that** the clutch plate (1) comprises openings (12) into which projections of the conical ring (5) engage.

5. Clutch body for a gearshift and synchronising device according to one of claims 1 to 4, **characterised in that** the conical ring (5) and the clutch plate (1) are connected inseparably, preferably welded, to each other and form the clutch body (6).

## Revendications

1. Corps d'embrayage (6) pour un dispositif de synchronisation et de changement de vitesse, plus particulièrement pour des boîtes de vitesses de véhicules automobiles, ledit corps d'embrayage comprenant un disque d'embrayage (1) et un anneau conique (5), ledit disque d'embrayage (1) étant adapté à être relié, au moins fixe en rotation, à une roue dentée et comprenant sur sa périphérie extérieure, un profil denté (7) qui est adapté à être accouplé à un profil conjugué d'un manchon coulissant qui est immobilisé en rotation sur un arbre de transmission, **caractérisé en ce que** le disque d'embrayage (1) est fabriqué de plusieurs pièces (2, 2a, 3, 3a ou 4) et ces pièces (2, 2a, 3, 3a ou 4) sont reliées, l'une à l'autre, par des liaisons à accrochage (10 et 11), de sorte que, après l'accrochage des pièces, l'une à l'autre, celles-ci sont entièrement localisées dans le plan du disque d'embrayage (1).

2. Corps d'embrayage pour un dispositif de synchronisation et de changement de vitesse selon la revendication 1, **caractérisé en ce que** les pièces (2, 2a, 3, 3a ou 4) sont fabriquées sans enlèvement de copeaux par un procédé de formage ou d'emboutissage.

3. Corps d'embrayage pour un dispositif de synchronisation et de changement de vitesse selon l'une des revendications 1 ou 2, **caractérisé en ce que** les pièces (2, 2a, 3, 3a et 4) sont soudées, l'une à l'autre (soudures 8).

4. Corps d'embrayage pour un dispositif de synchronisation et de changement de vitesse selon l'une des revendications 1 à 3, **caractérisé en ce que** le disque d'embrayage (1) comprend des ouvertures (12) dans lesquelles s'engagent des saillies de l'anneau conique (5).

5. Corps d'embrayage pour un dispositif de synchronisation et de changement de vitesse selon l'une des revendications 1 à 4, **caractérisé en ce que** l'anneau conique (5) et le disque d'embrayage (1) sont reliés de manière non détachable, de préférence, soudés, l'un à l'autre, et forment le corps d'embrayage (6).
